# FASCICULE DE BREVET EUROPEEN

(11) **EP 4 051 536 B1**
(45) Date de publication et mention de la délivrance du brevet: **29.11.2023**
(21) Numéro de dépôt: 20799781.8
(22) Date de dépôt: 15.10.2020
(51) Int. Cl.: B60Q 1/04

(54) **PROJECTEUR DE VÉHICULE AUTOMOBILE**
SCHEINWERFER FÜR KRAFTFAHRZEUG
HEADLAMP FOR A MOTOR VEHICLE

(30) Priorité: 30.10.2019 FR 1912200
(43) Date de publication de la demande: 07.09.2022
(73) Titulaire: PSA Automobiles SA, 78300 Poissy (FR)
(72) Inventeur: ROYER, Guillaume, 91680 Bruyeres Le Chatel (FR); VIDEIRA, Filipe, 78140 Velizy Villacoublay (FR)
(86) Numéro de dépôt international: PCT/FR2020/051844
(87) Numéro de publication internationale: WO 2021/084182

(56) Documents cités:
- EP-A1- 3 412 506
- WO-A2-2010/001037
- CN-A- 102 381 240
- CN-A- 109 466 421
- JP-A- H11 329 020
- JP-A- 2013 075 559
- JP-A- 2015 098 256
- JP-A- 2018 069 952
- US-A1- 2019 291 632

## Description

La présente invention revendique la priorité de la demande française 1912200 déposée le 30 Octobre 2019.

L'invention s'applique au montage sur des véhicules automobiles de modules d'éclairage et de signalisation et, en particulier, des boîtiers de projecteurs.

Plus particulièrement, l'invention concerne un dispositif de montage d'un boîtier de projecteur comprenant une patte multi-fonctions permettant d'assurer conjointement l'iso-statisme du projecteur sur la caisse du véhicule.

Un module de projecteur comprend généralement une source d'éclairage (lampe Halogène, Xénon, LED) pilotée par une carte électronique (PCB) et associée à divers composants optiques (lentille, réflecteur ...), l'ensemble étant destiné à être encapsulé dans un boîtier. Ce boîtier est soit fermé sur l'avant en étant obturé par une glace, soit ouvert sur l'avant et ce sont alors les lentilles qui assurent l'étanchéité vis-à-vis de l'environnement extérieur.

Pour des raisons de style, un projecteur présente une structure et un profil qui sont spécifiques à chaque véhicule. En particulier, la géométrie de ses éléments constitutifs (le boîtier, la glace ou les lentilles) est conçue en fonction de l'environnement du projecteur sur le véhicule et de la conception de ses composants internes.

En outre, les contraintes normatives ou réglementaires et de qualité imposent au projecteur d'assurer certaines propriétés ou fonctions, telles que l'évacuation de l'eau, la présence de zones de rupture pré-localisées des pattes et d'organes de réception d'un kit de remplacement de la patte en service après-vente.

Dans ce contexte, le dispositif de montage du projecteur comprend des pattes faisant saillie sur la paroi du boîtier qui sont fixées, généralement par vissage, sur les armatures du véhicule. Ces pattes doivent être capables de maintenir le projecteur dans une position et une orientation qui correspondent à un bon iso-statisme, l'objectif étant de gérer les jeux et l'affleurement en respectant le référentiel technique.

Le brevet FR2986774B1 décrit un support multifonctions destiné au montage d'éléments fonctionnels sur la caisse d'un véhicule automobile. Ce support multifonctions comprend, d'une part, des moyens assurant la fixation du support multifonctions sur la caisse et, d'autre part des moyens destinés à maintenir, sur ce support multifonctions, au moins un élément fonctionnel et, notamment, un projecteur ayant une fonction d'éclairage et un collecteur d'eau.

Cependant, ce support ne décrit pas, ni ne suggère un quelconque moyen de fixation d'un projecteur permettant de remplir le cahier des charges imposé en assurant conjointement les multiples fonctions définies ci-dessus.

On connaît par le document CN102381240 un assemblage de phares automobiles combinés. On connaît par le document JP2018069952 un composant électrique ou un composant de véhicule servant d'élément de plaque extérieure. On connaît par le document WO2010/001037 un agencement pour une partie avant de véhicule automobile. D'autres projecteurs sont connus par les documents CN 109 466 421 A ou EP 3 412 506 A1.

Dans ce contexte, l'invention propose un dispositif de montage comprenant une patte multifonctions assurant à elle-seule la fixation du boîtier de projecteur sur la caisse du véhicule.

Ce but est atteint au moyen d'un projecteur selon la revendication 1.

Selon l'invention, la première partie de la patte comporte, en outre, des plots destinés à assurer l'assemblage du boîtier avec une patte de remplacement en cas de rupture de la patte d'origine.

Selon l'invention, les orifices d'évacuation d'eau sont ménagés entre des nervures longitudinales de renfort.

Selon l'invention, les plots pour l'assemblage avec une patte de remplacement sont portés par les nervures longitudinales.

Selon encore une autre caractéristique, les nervures longitudinales se prolongent jusque sur la troisième partie en présentant sur la seconde partie des lignes d'affaiblissement formant la zone sécable.

Selon une variante spécifique, la patte de fixation porte une nervure transversale de rigidification s'étendant perpendiculairement aux nervures longitudinales et délimitant avec ces dernières la zone dite sécable.

Selon une autre variante de réalisation, la troisième partie de la patte est partiellement évidée.

Selon encore une autre variante, il est prévu que la première partie comporte cinq orifices d'évacuation d'eau et la troisième partie porte deux douilles de réception des organes de fixation sur le véhicule.

Dans ce cas, l'une des douilles de réception des organes de fixation a une section circulaire tandis que l'autre douille a une section oblongue.

Un autre objet de l'invention est un projecteur muni d'un dispositif de montage présentant les caractéristiques mentionnées ci-dessus pour la fixation sur la structure d'un véhicule automobile.

La patte de fixation intégrée au dispositif de l'invention assure, à elle-seule et de manière fiable et efficace, le montage du boîtier de projecteur sur la structure d'un véhicule ainsi que plusieurs fonctions complémentaires.

Le dispositif de l'invention présente un intérêt technico-économique significatif, d'une part, en s'affranchissant de l'utilisation de pièces supplémentaires et, d'autre part, en permettant à la fois une standardisation de l'interface du boîtier et du véhicule et en garantissant des opérations de maintenance aisées et rapides avec un référencement de très peu de pièces.

D'autres caractéristiques et avantages de l'invention ressortiront à la lecture de la description qui va suivre, en référence aux figures annexées et détaillées ci-après.
[Fig. 1A] est une vue d'ensemble en perspective d'un boîtier de projecteur pourvu d'un mode de réalisation du dispositif de montage selon l'invention.
[Fig. 1B] est une vue de détail en perspective boîtier de la figure 1A avec le dispositif de l'invention.
[Fig. 1C] est une vue en perspective de la patte de fixation du dispositif de montage selon l'invention.
[Fig. 2] est une vue de détail de face du boîtier de la figure 1A après rupture de la patte de fixation de la figure 2.

Pour plus de clarté, les éléments identiques ou similaires sont repérés par des signes de référence identiques sur l'ensemble des figures.

Naturellement, les modes de mise en oeuvre du procédé de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

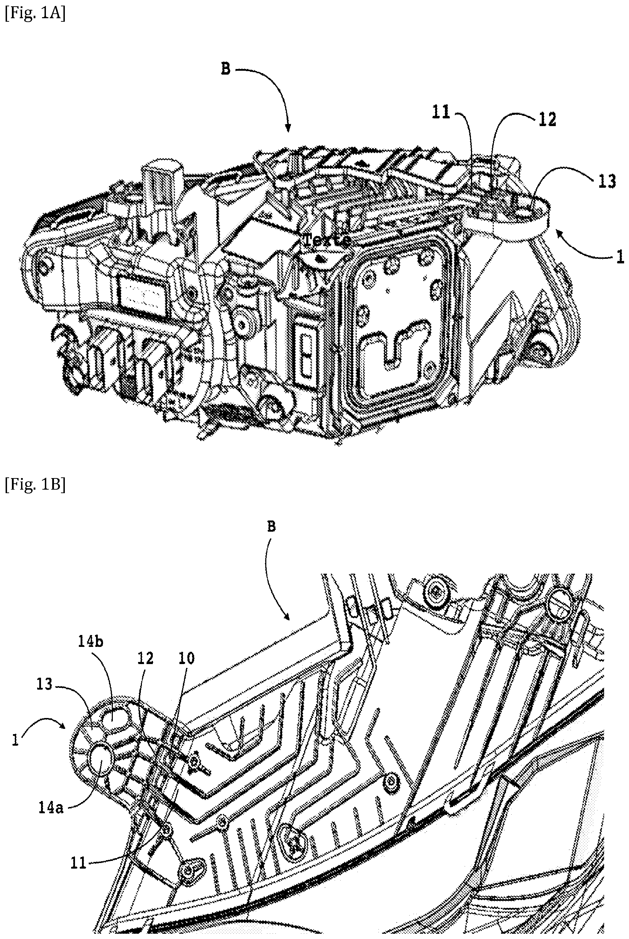

Le dispositif de l'invention est destiné au montage d'un boîtier B de projecteur sur la structure d'un véhicule automobile. Un tel dispositif comprend, de manière traditionnelle, au moins une patte 1 faisant saillie à la partie supérieure du boîtier B et destinée à la fixation sur la structure du véhicule, comme illustré par la figure 1A,

Dans ce cadre, l'invention consiste toutefois à ne prévoir qu'une seule patte 1 pour assurer la fixation du boîtier B tout en disposant conjointement de fonctions spécifiques qui sont à même d'être apportées par cette unique patte. Ces fonctions sont essentiellement, l'évacuation de l'eau susceptible de stagner sur la paroi du boîtier B, la réalisation d'une zone sécable localisée sélectivement sur la patte de façon à permettre une séparation aisée de celle-ci en cas de fortes sollicitations mécaniques et la présence de moyens d'ancrage d'une patte de remplacement en cas de rupture de la patte d'origine.

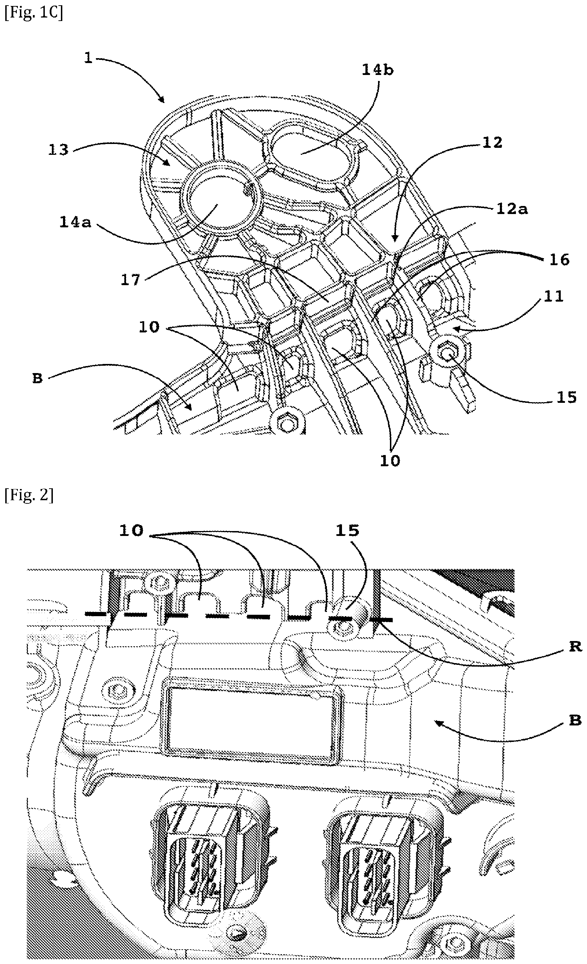

A cet effet, la patte de fixation 1 comprend, comme illustré en détail sur les figures 1B et 1C, une première partie 11 pour le raccordement au boîtier B dans laquelle sont ménagés des orifices 10 pour l'évacuation d'eau.

Les orifices 10 d'évacuation d'eau sont ménagés entre des nervures longitudinales 16 de renfort et, dans le mode de réalisation représenté, notamment, sur la figure 1C, la première partie 11 comporte ici cinq orifices 10 adjacents.

La première partie 11 de la patte 1 comporte, en outre, des plots 15 destinés à assurer l'assemblage du boîtier B avec une patte de remplacement (non représentée), en cas de rupture de la patte d'origine. Ces plots 15 sont portés par les nervures longitudinales 16 et présentent, éventuellement, un alésage taraudé pour la pose de vis.

Cette première partie 11 se prolonge vers l'extérieur par une seconde partie 12 comportant une zone sécable. A cet effet, les nervures longitudinales 16 présentent sur la seconde partie 12 des lignes d'affaiblissement 12a destinées à localiser sélectivement la rupture tout en la facilitant. Ces lignes d'affaiblissement 12a sont, par exemple, obtenues par une restriction de matière.

Les nervures longitudinales 16 se prolongent jusque sur une troisième partie 13 située à l'extrémité de la patte 1 et reliée à la seconde partie intermédiaire 12. Dans un but d'allègement, cette troisième partie est partiellement évidée et porte au moins une douille et ici deux douilles 14a, 14b de réception d'un organe de fixation sur le véhicule (non représenté).

La patte 1 porte, en outre, une nervure transversale 17 de rigidification qui s'étend perpendiculairement aux nervures longitudinales 16 et qui délimite, au moins partiellement, avec celles-ci la zone dite sécable, comme cela est visible sur la figure 2 qui représente le boîtier B après séparation de la patte 1 d'origine.

La patte 1 peut être réalisée par moulage à injection d'une matière plastique de façon monobloc avec la paroi du boîtier B ou par surmoulage sur la paroi supérieure du boîtier B.

Comme illustré par la figure 2, la rupture de la patte 1 qui se produit, par exemple, sous l'effet d'un choc, s'est faite le long d'une ligne transversale R située au-dessus des orifices 10 de telle sorte que la fonction d'évacuation de l'eau est conservée, y compris après la pose d'une patte de remplacement.

De même les plots 15 qui sont situés à proximité des extrémités intérieures des nervures longitudinales 16, au niveau de la zone de raccordement à la paroi supérieure du boîtier B, ne sont pas affectés par cette rupture. La position des plots 15 est telle que la pose d'une patte de remplacement est possible même si la patte d'origine 1 qui s'est rompue n'est pas totalement séparée du boîtier.

## Revendications

1. Projecteur muni d'un dispositif de montage d'un boîtier (B) de projecteur sur un véhicule automobile, comprenant au moins une patte (1) faisant saillie à la partie supérieure du boîtier et destinée à la fixation sur la structure du véhicule, **caractérisé en ce que** ladite patte (1) comprend une première partie (11) de raccordement au boîtier (B) dans laquelle sont ménagés des orifices (10) pour l'évacuation d'eau, susceptible de stagner sur une paroi du boîtier (B), qui se prolonge vers l'extérieur par une seconde partie (12) comportant une zone sécable elle-même reliée à une troisième partie (13) d'extrémité portant au moins une douille (14a, 14b) de réception d'un organe de fixation sur le véhicule ; lesdits orifices (10) d'évacuation d'eau sont ménagés entre des nervures longitudinales (16) de renfort, **caractérisé en ce que** la première partie (11) de la patte (1) comporte, en outre, des plots (15) destinés à assurer l'assemblage du boîtier (B) avec une patte de remplacement en cas de rupture de la patte (1) d'origine ;
les plots (15) sont portés par lesdites nervures (16).

2. Projecteur selon la revendication 1, **caractérisé en ce que** lesdites nervures (16) se prolongent jusque sur la troisième partie (13) en présentant sur la seconde partie (12) des lignes d'affaiblissement (12a) formant la zone sécable.

3. Projecteur selon l'une des revendications précédentes, **caractérisé en ce que** ladite patte (1) porte une nervure transversale (17) de rigidification s'étendant perpendiculairement aux nervures longitudinales (16) et délimitant, avec ces dernières, ladite zone sécable.

4. Projecteur selon l'une des revendications précédentes, **caractérisé en ce que** la troisième partie (13) de ladite patte (1) est partiellement évidée.

5. Projecteur selon l'une des revendications précédentes, **caractérisé en ce que** la première partie (11) comporte cinq orifices (10) d'évacuation d'eau et la troisième partie (13) porte deux douilles (14a, 14b) de réception des organes de fixation sur le véhicule.

6. Projecteur selon la revendication précédente, **caractérisé en ce que** l'une (14a) desdites douilles de réception des organes de fixation a une section circulaire tandis que l'autre douille (14b) a une section oblongue.

## Patentansprüche

1. Scheinwerfer, der mit einer Vorrichtung zur Montage eines Gehäuses (B) des Scheinwerfers an einem Kraftfahrzeug ausgestattet ist und mindestens eine Lasche (1) umfasst, die vom oberen Teil des Gehäuses vorsteht und zur Befestigung an der Struktur des Fahrzeugs bestimmt ist, **dadurch gekennzeichnet, dass** der Ansatz (1) einen ersten Teil (11) zur Verbindung mit dem Gehäuse (B) umfasst, in dem Öffnungen (10) zum Ableiten von Wasser ausgebildet sind, das an einer Wand des Gehäuses (B) stagnieren kann nach außen durch einen zweiten Teil (12) verlängert ist, der selbst eine Bruchzone aufweist und mit einem dritten Endteil (13) verbunden ist, der mindestens eine Buchse (14a, 14b) zur Aufnahme einer Befestigungsvorrichtung am Fahrzeug trägt;
wobei die Wasseraustrittsöffnungen (10) zwischen Längsverstärkungsrippen (16) vorgesehen sind, **dadurch gekennzeichnet, dass** der erste Teil (11) des Ansatzes (1) außerdem Stifte (15) aufweist, die dazu bestimmt sind, den Zusammenbau des Gehäuses (B) sicherzustellen eine Ersatzlasche für den Fall eines Bruchs der Originallasche (1);
die Stollen (15) werden von den Rippen (16) getragen.

2. Scheinwerfer nach Anspruch 1, **dadurch gekennzeichnet, dass** sich die Rippen (16) bis zum dritten Teil (13) erstrecken und am zweiten Teil (12) Schwächungslinien (12a) aufweisen, die die teilbare Zone bilden.

3. Scheinwerfer nach einem der vorhergehenden Ansprüche, **dadurch gekennzeichnet, dass** die Lasche (1) eine Querrippe (17) zur Versteifung trägt, die sich senkrecht zu den Längsrippen (16) erstreckt und mit diesen die Sollbruchzone begrenzt.

4. Scheinwerfer nach einem der vorhergehenden Ansprüche, **dadurch gekennzeichnet, dass** der dritte Teil (13) der Lasche (1) teilweise versenkt ist.

5. Scheinwerfer nach einem der vorhergehenden Ansprüche, **dadurch gekennzeichnet, dass** der erste Teil (11) fünf Öffnungen (10) zum Ableiten von Wasser aufweist und der dritte Teil (13) zwei Buchsen (14a, 14b) zur Aufnahme von Befestigungsvorrichtungen trägt Fahrzeug.

6. Scheinwerfer nach dem vorhergehenden Anspruch, **dadurch gekennzeichnet, dass** eine (14a) der Fassungen zur Aufnahme der Befestigungselemente einen kreisförmigen Querschnitt aufweist, während die andere Fassung (14b) einen länglichen Querschnitt aufweist.

## Claims

1. Headlight provided with a device for mounting a headlight housing (B) on a motor vehicle, comprising at least one tab (1) projecting from the upper part of the housing and intended for attachment to the structure of the vehicle , **characterized in that** said tab (1) comprises a first part (11) for connection to the housing (B) in which orifices (10) are provided for the evacuation of water, likely to stagnate on a wall of the housing ( B), which extends outwards by a second part (12) comprising a breakable zone itself connected to a third end part (13) carrying at least one socket (14a, 14b) for receiving a fastening device on the vehicle;
said water evacuation orifices (10) are provided between longitudinal reinforcing ribs (16), **characterized in that** the first part (11) of the tab (1) further comprises studs (15) intended to ensure the assembly of the housing (B) with a replacement lug in the event of the original lug (1) breaking;
the studs (15) are carried by said ribs (16).

2. Projector according to claim 1, **characterized in that** said ribs (16) extend as far as the third part (13) while presenting on the second part (12) weakening lines (12a) forming the breakable zone.

3. Projector according to one of the preceding claims, **characterized in that** said tab (1) carries a transverse stiffening rib (17) extending perpendicular to the longitudinal ribs (16) and delimiting, with the latter, said breakable zone.

4. Projector according to one of the preceding claims, **characterized in that** the third part (13) of said tab (1) is partially hollowed out.

5. Projector according to one of the preceding claims, **characterized in that** the first part (11) comprises five water evacuation orifices (10) and the third part (13) carries two receiving sockets (14a, 14b) fastening devices on the vehicle.

6. Projector according to the preceding claim, **characterized in that** one (14a) of said sockets for receiving the fixing members has a circular section while the other socket (14b) has an oblong section.
